(19) Europäisches Patentamt
European Patent Office
Office européen des brevets

(11) **EP 4 787 497 A1**

(12) **EUROPEAN PATENT APPLICATION**
published in accordance with Art. 153(4) EPC

(43) Date of publication:
**05.08.2026 Bulletin 2026/32**

(21) Application number: **25867174.2**

(22) Date of filing: **02.10.2025**

(51) International Patent Classification (IPC):
***H01M 4/62*** *(2006.01)* ***H01M 4/13*** *(2010.01)*
***H01M 10/052*** *(2010.01)* ***H01M 4/02*** *(2006.01)*

(52) Cooperative Patent Classification (CPC):
**H01M 4/02; H01M 4/13; H01M 4/62; H01M 10/052;**
Y02E 60/10

(86) International application number:
**PCT/KR2025/015887**

(87) International publication number:
**WO 2026/079900 (16.04.2026 Gazette 2026/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.10.2024 KR 20240138982**

(71) Applicant: **LG ENERGY SOLUTION, LTD.**
**Seoul 07335 (KR)**

(72) Inventors:
- **LEE, Gil Ryeong**
  **Daejeon 34122 (KR)**
- **SIM, Hye Jin**
  **Daejeon 34122 (KR)**
- **KIM, Tae Gon**
  **Daejeon 34122 (KR)**
- **KIM, Young Seok**
  **Daejeon 34122 (KR)**
- **JEONG, Jae Hoon**
  **Daejeon 34122 (KR)**
- **YOON, Sung Soo**
  **Daejeon 34122 (KR)**
- **SONG, Sang Hoon**
  **Daejeon 34122 (KR)**

(74) Representative: **Hoffmann Eitle**
**Patent- und Rechtsanwälte PartmbB**
**Arabellastraße 30**
**81925 München (DE)**

# (54) BINDER FOR CATHODE OF LITHIUM SECONDARY BATTERY, AND CATHODE AND LITHIUM SECONDARY BATTERY INCLUDING SAME

(57) The present invention provides a binder for a lithium secondary battery positive electrode, including a cationic polyvinylidene fluoride-based polymer substituted with an ammonium cation.

EP 4 787 497 A1

## Description

### TECHNICAL FIELD

This application claims the benefit of Korean Patent Application No. 10-2024-0138982, filed on 10/11/2024, in the Korean Intellectual Property Office, the disclosure of which is incorporated herein in its entirety by reference.

The present invention relates to a binder for a lithium secondary battery positive electrode, and a positive electrode and a lithium secondary battery which include the same.

### BACKGROUND ART

As industries utilizing secondary batteries, such as mobile phones, laptop computers, and electric vehicles, are rapidly growing, research and development efforts to improve the performance of secondary batteries are actively being pursued. In particular, lithium secondary batteries having high energy density and voltage, long cycle life, and low self-discharging rate have been commercially available and widely used.

In this regard, an electrode for a lithium ion secondary battery typically includes a current collector and an electrode active material layer as a functional layer formed on the current collector. In addition, the electrode active material layer is formed by, for example, coating the current collector with a slurry-like composition, which is prepared by dispersing an electrode active material and a binder composition including a polymer that serves as a binding agent, in a dispersion medium, followed by drying.

Typically, binders for active material layers have been developed to improve battery performance, including enhancing the dispersibility of a positive electrode active material, increasing the mechanical strength of a positive electrode, and improving the stability of a positive electrode. In particular, while polyvinylidene fluoride (PVdF) binders, which exhibit excellent electrochemical performance and thermal stability, are frequently used as binders for positive electrode active material layers, the need for performance improvement remains.

### DISCLOSURE OF THE INVENTION

### TECHNICAL PROBLEM

An aspect of the present invention provides a binder for a lithium secondary battery positive electrode, which exhibits enhanced mechanical strength and lithium ion conductivity.

Another aspect of the present invention provides a positive electrode including the binder for a lithium secondary battery positive electrode, thereby exhibiting enhanced electrode stability.

Another aspect of the present invention provides a lithium secondary battery including the binder for a lithium secondary battery positive electrode, thereby exhibiting improvements in cycle characteristics, particularly high-temperature lifespan characteristics.

### TECHNICAL SOLUTION

According to an aspect of the present invention, there is provided a binder for a lithium secondary battery positive electrode, including a cationic polyvinylidene fluoride-based polymer substituted with an ammonium cation.

According to another aspect of the present invention, there is provided a positive electrode including a positive electrode current collector, and a positive electrode active material layer including a positive electrode active material, a positive electrode conductive material, and a positive electrode binder, wherein the positive electrode binder including the binder for a positive electrode.

According to another aspect of the present invention, there is provided a lithium secondary battery including the positive electrode described above, a negative electrode, and a non-aqueous electrolyte.

### ADVANTAGEOUS EFFECTS

A binder for a lithium secondary battery positive electrode according to the present invention has an ammonium cation present in a structure thereof, and thus exhibits high affinity for a counter anion of lithium ions supplied from a lithium salt within a non-aqueous electrolyte included in the lithium secondary battery. This facilitates the dissociation of lithium ions, resulting in enhanced mobility of lithium ions within an electrode, thereby improving electrode stability during lithium secondary battery charging and discharging. In addition, the ammonium cation is substituted with an aliphatic functional group or an aromatic functional group, thereby enhancing mechanical stability and chemical stability.

Furthermore, a positive electrode according to the present invention exhibits enhanced electrode stability during

charging and discharging, thereby inhibiting electrode collapse during charging and discharging, and lithium secondary batteries including the positive electrode according to the present invention exhibit enhanced lifespan characteristics.

## MODE FOR CARRYING OUT THE INVENTION

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

The terminology used herein is for the purpose of describing particular example embodiments only and is not intended to be limiting of the present invention. The singular expressions "a", "an", and "the" are intended to include the plural forms as well, unless the context clearly indicates otherwise.

Herein, it will be further understood that the terms "include", "comprise", or "have" specify the presence of stated features, numbers, steps, elements, or combinations thereof, but do not preclude the presence or addition of one or more other features, numbers, steps, elements, or combinations thereof.

In addition, as used herein, "a" and "b" in the description of "a to b carbon atoms" indicate the number of carbon atoms included in a specific functional group. That is, the functional group may include "a" to "b" carbon atoms. For example, "alkylene group having 1 to 5 carbon atoms" indicates an alkylene group including 1 to 5 carbon atoms, i.e., $-CH_2-$, $-CH_2CH_2-$, $-CH_2CH_2CH_2-$, $-CH_2(CH_3)CH-$, $-CH(CH_3)CH_2-$, or $-CH(CH_3)CH_2CH_2-$.

In addition, as used herein, all alkyl groups may be substituted or unsubstituted. Unless otherwise defined, the term "substituted" indicates that at least one hydrogen bonded to carbon is substituted with an element other than hydrogen, for example, substituted with a halogen atom, a nitro group, a nitrile group, and the like.

Herein, "weight average molecular weight" may be measured using a gel permeation chromatography (GPC) device. Specifically, in the present invention, the measurement is performed using 1200 series from Agilent under GPC conditions. The column used in this case may be PL mixed B column from Agilent, and the solvent may be tetrahydrofuran (THF) or dimethylformamide (DMF). Meanwhile, unless specifically defined otherwise in this specification, molecular weight may refer to the weight average molecular weight.

In addition, herein, "viscosity" nay be measured using a commercially available viscometer for a test specimen. Specifically, in the present invention, "viscosity" was measured using Rheometer MCR 302 from Anton Paar, and slurry viscosity may be measured at a temperature of 25°C and a shear rate of 2.5 (1/s).

Hereinafter, the present invention will be described in more detail.

A binder for a lithium secondary battery positive electrode, a positive electrode, and/or a lithium secondary battery according to the present invention may include at least one of the following components, and may include any combination of technically feasible components among the following components.

### Binder for lithium secondary battery positive electrode

The present invention provides a binder for a lithium secondary battery positive electrode, the binder including a cationic polyvinylidene fluoride-based polymer substituted with an ammonium cation. Specifically, the ammonium cation may be a quaternary ammonium cation. The quaternary ammonium cation has high affinity for a counter anion of lithium ions supplied from a lithium salt in a non-aqueous electrolyte. This facilitates the dissociation of lithium ions, resulting in enhanced mobility of lithium ions within an electrode,

The cationic polyvinylidene fluoride-based polymer substituted with an ammonium cation may include a repeating unit of Formula 1 below.

[Formula 1]

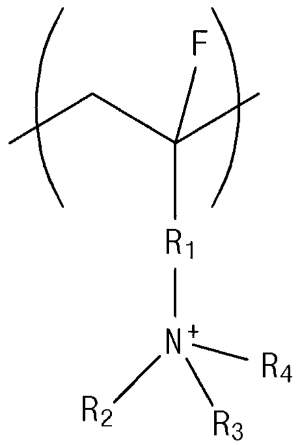

In Formula 1 above, $R_1$ may be a divalent organic group. The divalent organic group may be, for example, an alkylene group having 1 to 10 carbon atoms, an alkenylene group having 2 to 10 carbon atoms, an alkynylene group having 2 to 10 carbon atoms, or an arylalkylene group having 7 to 20 carbon atoms.

In Formula 1 above, $R_1$ may have a structure represented by Formula 1-1 below.

[Formula 1-1]

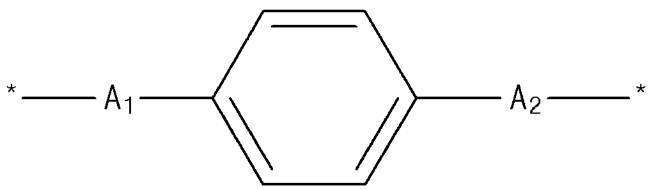

In Formula 1-1 above, $A_1$ and $A_2$ may each independently be a direct linkage or an alkylene group having 1 to 5 carbon atoms, and may preferably be a direct linkage.

In Formula 1-1 above, * may be a bonding site.

In the cationic polyvinylidene fluoride-based polymer substituted with an ammonium cation, when the ammonium cation includes an alkyl group, an alkenyl group, an alkynyl group, an aryl group, an alkylaryl group, or a functional group including a benzene ring as in Formula 1-1, main chain-side chain interactions are stabilized, which may enhance the mechanical strength of a polymer, and resistance to oxidation/reduction and thermal decomposition is enhanced, which may improve chemical stability.

In Formula 1 above, $R_2$, $R_3$, and $R_4$ may each independently be any one selected from the group consisting of an alkyl group having 1 to 5 carbon atoms, an alkenyl group having 2 to 5 carbon atoms, an alkynyl group having 2 to 5 carbon atoms, an aryl group having 6 to 8 carbon atoms, and an alkylaryl group having 8 to 10 carbon atoms. Preferably, $R_2$, $R_3$, and $R_4$ may each independently be an alkyl group having 1 to 5 carbon atoms.

The cationic polyvinylidene fluoride-based polymer substituted with an ammonium cation may include a repeating unit of Formula 1 above in a molar fraction of 0.01 to 20 mol%, preferably 0.05 to 15 mol%, and more preferably 0.1 to 10 mol%, with respect to a total number of moles of repeating units of the polymer. When the mole fraction of the repeating unit of Formula 1 above in the polymer satisfies the above range, a positively charged portion of the polymer attracts anions in an electrolyte during battery manufacturing, which sufficiently enhances the mobility of lithium ions, thereby improving electrode stability during charging and discharging and enhancing cycle characteristics.

The cationic polyvinylidene fluoride-based polymer substituted with an ammonium cation may include a repeating unit of Formula 2 below.

[Formula 2]

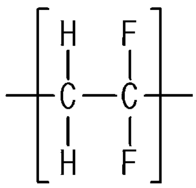

The cationic polyvinylidene fluoride-based polymer substituted with an ammonium cation may include a repeating unit of Formula 2 above in a molar fraction of 80.00 to 99.99 mol%, preferably 85.00 to 99.95 mol%, and more preferably 90.0 to 99.9 mol%, with respect to a total number of moles of repeating units of the polymer. When the mole fraction of the repeating unit of Formula 2 above in the polymer satisfies the above range, the polymer maintains electrochemical and thermal stability as a positive electrode binder.

The cationic polyvinylidene fluoride-based polymer according to the present invention may have a weight average molecular weight of 300,000 g/mol to 1,500,000 g/mol, preferably 500,000 g/mol to 1,400,000 g/mol, and more preferably 700,000 g/mol to 1,300,000 g/mol. When the molecular weight satisfies the above range, phase separation of a slurry composition does not occur, a positive electrode active material and other components are sufficiently dispersed, and uniform stirring is achieved. In addition, when manufacturing a positive electrode active material layer using a positive electrode slurry composition, superior adhesion to an electrode current collector is achieved.

## Positive electrode

A positive electrode slurry composition according to the present invention may be prepared by dissolving or dispersing a positive electrode active material, a conductive material, a binder, and the like in a solvent.

The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The solvent may be used in an amount of 20 wt% to 50 wt%, 21 wt% to 45 wt%, or 25 wt% to 42 wt%, with respect to a total weight of the positive electrode slurry composition.

The solid content with respect to a total of the positive electrode slurry composition according to the present invention may be 50 wt% to 80 wt%, 55 wt% to 79 wt%, or 58 wt% to 75 wt%. The positive electrode slurry composition according to the present invention maintains low viscosity even with high solid content, and thus, a significant load is not applied to a stirrer motor or a transfer pump during the preparation of the slurry composition, resulting in improved processability of a positive electrode manufacturing process. In addition, when manufacturing a positive electrode using the positive electrode slurry composition according to the present invention, a positive electrode active material layer is coated uniformly.

A positive electrode according to the present invention includes a positive electrode current collector, and a positive electrode active material layer including a positive electrode active material, a positive electrode conductive material, and a positive electrode binder.

The positive electrode according to the present invention may be prepared by applying the positive electrode slurry composition described above, followed by drying and rolling. In addition, in another method, the positive electrode may be prepared by casting the positive electrode slurry composition on a separate support and then laminating a film separated from the support on the positive electrode current collector.

The positive electrode current collector according to the present invention may include a highly conductive metal and is not particularly limited as long as the positive electrode active material layer easily adheres thereto and the positive electrode current collector has no reactivity in a voltage range of a battery. As the positive electrode current collector, for example, stainless steel, aluminum, nickel, titanium, fired carbon, or aluminum or stainless steel that is surface-treated with one of carbon, nickel, titanium, silver, or the like may be used. In addition, the positive electrode current collector may typically have a thickness of 3 to 500 $\mu$m, and fine irregularities may be formed on a surface of the current collector to improve the adhesion of the positive electrode active material. For example, the positive electrode current collector may be used in various forms such as a film, a sheet, a foil, a net, a porous body, a foam body, and a non-woven fabric body.

The positive electrode active material is a compound capable of reversibly intercalating and deintercalating lithium, and may specifically include a lithium metal oxide including lithium and at least one metal such as cobalt, manganese, nickel, or aluminum. More specifically, the lithium metal oxide may be lithium-manganese-based oxide (e.g., $LiMnO_2$, $LiMn_2O_4$, and the like), lithium-cobalt-based oxide (e.g., $LiCoO_2$ and the like), lithium-nickel-based oxide (e.g., $LiNiO_2$ and the like), lithium-nickel-manganese-based oxide (e.g., $LiNi_{1-Y}Mn_YO_2$ (where $0<Y<1$), $LiMn_{2-Z}Ni_ZO_4$ (where $0<Z<2$) and the like), lithium-nickel-cobalt-based oxide (e.g., $LiNi_{1-Y1}Co_{Y1}O_2$ (where $0<Y1<1$ and the like), lithium-manganese-cobalt-based oxide (e.g., $LiCo_{1-Y2}Mn_{Y2}O_2$ (where $0<Y2<1$), $LiMn_{2-Z1}Co_{Z1}O_4$ (where $0<Z1<2$) and the like),

lithium-nickel-manganese-cobalt-based oxide (e.g., $Li(Ni_pCo_qMn_r)O_2$ (where 0<p<1, 0<q<1, 0<r <1, and p+q+r=1) or $Li(Ni_{p1}Co_{q1}Mn_{r1})O_4$ (where 0<p1<2, 0<q1< 2, 0<r1<2, p1+q1+r1=2) and the like), or lithium-nickel-cobalt-transition metal (M) oxide (e.g., $Li(Ni_{p2}Co_{q2}Mn_{r2}M_{s2})O_2$ (where M is selected from the group consisting of Al, Fe, V, Cr, Ti, Ta, Mg, and Mo, and p2, q2, r2, and s2 are each an atomic fraction of independent elements, where 0<p2<1, 0<q2 <1, 0<r2<1, 0<s2<1, and p2+q2+r2+s2=1) and the like), and any one thereof or a compound of two or more thereof may be included.

In particular, in terms of improving capacity and stability of batteries, the lithium metal oxide may be $LiCoO_2$, $LiMnO_2$, $LiNiO_2$, lithium nickel manganese cobalt oxide (e.g., $Li(Ni_{1/3}Mn_{1/3}Co_{1/3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, and $Li(Ni_{0.8}Mn_{0.1}Co_{0.1})O_2$), or lithium nickel cobalt aluminum oxide (e.g., $Li(Ni_{0.8}Co_{0.15}Al_{0.05})O_2$ and the like), and any one thereof or a compound of two or more thereof may be included.

Among these, the positive electrode active material according to the present invention may be a lithium transition metal oxide having a composition represented by Formula 3 below. As nickel content increases, a greater amount of lithium byproducts such as LiOH and $Li_2CO_3$ are eluted from the positive electrode active material, and accordingly, the time-dependent change of the positive electrode slurry composition easily occurs. However, the positive electrode slurry composition according to the present invention may inhibit such time-dependent change by controlling the mole fraction of aromatic repeating units and aliphatic repeating units in an aramid-based polyamide polymer binder.

[Formula 3] $$Li_aNi_{1-x-y}Co_xM^1{}_yM^2{}_zO_2$$

In Formula 3 above, $M^1$ may be at least one selected from Mn and Al, and preferably may be Mn or a combination of Mn and Al.

In Formula 3 above, $M^2$ may be any one element or two or more elements selected from the group consisting of Zr, Ti, Mg, Ta, Nb, W, Mo, and Cr.

a above represents a molar ratio of lithium in the lithium transition metal oxide, where 1.0≤a≤1.3, 1.0≤a≤1.2, or 1.0≤a≤1.1.

1-x-y above represents a molar ratio of nickel among metal elements excluding lithium in the lithium transition metal oxide, where 0.80≤1-x-y<1.0, 0.80≤1-x-y≤0.98, 0.80≤1-x-y≤0.95, 0.83≤1-x-y≤0.95, or 0.90≤1-x-y≤0.95. When the nickel content satisfies the above range, high capacity characteristics may be achieved.

x above represents a molar ratio of cobalt among all metals excluding lithium in the lithium transition metal oxide, where 0<x<0.4, 0<x≤0.2, or 0.01≤x≤0.10.

y above represents a molar ratio of M1 among metal elements excluding lithium in the lithium transition metal oxide, where 0<y<0.4, 0<y≤0.2, or 0.01≤y≤0.10.

z above represents a molar ratio of M2 among metal elements excluding lithium in the lithium transition metal oxide, where 0≤z≤0.1 or 0≤z≤0.05.

The positive electrode active material included in the positive electrode active material layer according to the present invention may be included in an amount of 95 wt% to 100 wt%, preferably 98 wt% to 100 wt%, and more preferably 99 wt% to 100 wt%, with respect to a total of the positive electrode active material in the positive electrode active material layer.

The positive electrode conductive material is used to impart conductivity to an electrode, and any conductive material may be used without particular limitation as long as it has electronic conductivity without causing chemical changes in batteries to be constituted. Specific examples thereof may include graphite such as natural graphite or artificial graphite; a carbon-based material such as carbon black, acetylene black, Ketjen black, channel black, furnace black, lamp black, thermal black, and carbon fibers; metal powder or metal fiber such as copper, nickel, aluminum, and silver; conductive tubes such as carbon nanotubes; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.1 to 15 wt% with respect to a total weight of the positive electrode slurry composition.

The positive electrode binder according to the present invention may include a cationic polyvinylidene fluoride-based polymer substituted with an ammonium cation. The cationic polyvinylidene fluoride-based polymer substituted with an ammonium cation may be included in an amount of 0.1 wt% to 5 wt%, 0.2 wt% to 4.0 wt%, 0.3 wt% to 3.8 wt%, or 0.5 wt% to 3.5 wt%, with respect to a total of the positive electrode active material layer.

The positive electrode binder according to the present invention may further include a typical binder in addition to the cationic polyvinylidene fluoride-based polymer substituted with an ammonium cation. For example, the positive electrode binder according to the present invention may be polyvinylidene fluoride (PVDF), a polyvinylidene fluoride-hexafluoropropylene copolymer (PVDF-co-HFP), polyvinyl alcohol, polyacrylonitrile, polymethymethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene-butadiene rubber (SBR), fluorine rubber, polyacrylic acid, and a polymer obtained by substituting hydrogen of the above materials with Li, Na, or Ca, or various copolymers, and any one thereof or a mixture of two or more thereof may be used.

The additional binder may be included in an amount of 0.1 to 5 wt% with respect to a total weight of the positive electrode slurry composition.

## Electrochemical device

Next, an electrochemical device according to the present invention will be described. The electrochemical device according to the present invention includes the positive electrode according to the present invention described above, and the electrochemical device may be specifically a battery, a capacitor, or the like, and may be more specifically a lithium secondary battery.

Specifically, the lithium secondary battery includes a positive electrode, a negative electrode positioned to face the positive electrode, a separator sandwiched between the positive electrode and the negative electrode, and an electrolyte. The positive electrode is the same as that described above, and thus, a detailed description thereof will be skipped, and hereinafter, other components will only be described.

In addition, the lithium secondary battery may optionally further include a battery case for accommodating an electrode assembly composed of the positive electrode, the negative electrode, and the separator, and a sealing member for sealing the battery case.

In the lithium secondary battery according to the present invention, the negative electrode may include a negative electrode current collector and a negative electrode active material layer positioned on the negative electrode current collector.

The negative electrode current collector is not particularly limited as long as it has high conductivity without causing chemical changes in batteries. For example, copper, stainless steel, aluminum, nickel, titanium, fired carbon, copper or stainless steel that is surface-treated with one of carbon, nickel, titanium, silver, and the like, an aluminum-cadmium alloy, and the like may be used. In addition, the negative electrode current collector may typically have a thickness of 3 $\mu$m to 500 $\mu$m, and as in the case of the positive electrode current collector, fine irregularities may be formed on a surface of the current collector to improve the adhesion of the negative electrode active material. For example, the current collector may be used in various forms such as a film, a sheet, a foil, a net, a porous body, a foam body, and a non-woven fabric body.

The negative electrode active material layer optionally includes a binder and a conductive material in addition to the negative electrode active material.

A compound capable of reversibly intercalating and deintercalating lithium may be used as the negative electrode active material. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as $SiO_\beta$ ($0<\beta<2$), $SnO_2$, a vanadium oxide, and a lithium vanadium oxide; or a composite including the metallic compound and the carbonaceous material such as an Si-C composite or an Sn-C composite, and any one thereof or a mixture of two or more thereof may be used. In addition, a metallic lithium thin film may be used as the negative electrode active material. In addition, as a carbon material, low-crystalline carbon, high-crystalline carbon, and the like may all be used. Typical examples of the low-crystalline carbon may be soft carbon and hard carbon, and typical examples of the high-crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature fired carbon such as petroleum or coal tar pitch derived cokes.

The negative electrode active material may be included in an amount of 80 wt% to 99 wt% with respect to a total weight of the negative electrode active material layer.

The binder is a component that assists in the binding between the conductive material, the active material, and the current collector, and is typically added in an amount of 0.1 wt% to 10 wt% with respect to a total weight of the negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, styrene-butadiene rubber, nitrile-butadiene rubber, fluorine rubber, various copolymers thereof, and the like.

The conductive material is a component for further improving the conductivity of the negative electrode active material, and may be added in an amount of 10 wt% or less, preferably 5 wt% or less, with respect to a total weight of the negative electrode active material layer. Such conductive material is not particularly limited as long as it has conductivity without causing chemical changes in batteries, and for example, a conductive material, such as: graphite such as natural graphite and artificial graphite; carbon black such as acetylene black, Ketjen black, channel black, furnace black, lamp black, and thermal black; conductive fibers such as carbon fibers and metal fibers; metal powder such as carbon fluoride powder, aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by applying a composition for forming a negative

electrode active material layer, which is prepared by dissolving or dispersing a negative electrode active material and optionally a binder and a conductive material in a solvent, on a negative electrode current collector, followed by drying, or may be prepared by casting the composition for forming a negative electrode active material layer on a separate support and then laminating a film separated from the support on the negative electrode current collector.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having excellent moisture-retention ability for an electrolyte while having low resistance to the movement of an electrolyte is preferable. Specifically, a porous polymer film, for example, a porous polymer film prepared from a polyolefin-based polymer, such as ethylene homopolymer, propylene homopolymer, ethylene/butene copolymer, ethylene/hexene copolymer, and ethylene/methacrylate copolymer, or a laminated structure having two or more layers thereof may be used. In addition, a typical porous nonwoven fabric, for example, a nonwoven fabric formed of glass fiber having a high melting point or polyethylene terephthalate fiber may be used. Furthermore, a coated separator including a ceramic component or a polymer material may be used to secure heat resistance or mechanical strength, and a separator having a single-layer structure or a multi-layer structure may be optionally used.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the preparation of a lithium secondary battery, but is not limited thereto.

Specifically, the electrolyte may include an organic solvent and a lithium salt.

As the organic solvent, any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is desirable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more desirable.

The lithium salt may be used without particular limitation as long as it is a compound capable of providing lithium ions used in the lithium secondary battery. To be specific, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAl0_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$ LiCl, LiI, or $LiB(C_2O_4)_2$ may be used. The lithium salt may be preferably used in a concentration range of 0.1 M to 2.0 M. When the concentration of the lithium salt is included within the above range, the electrolyte has suitable conductivity and viscosity and may thus exhibit excellent performance, and lithium ions may effectively move.

To improve life characteristics of batteries, inhibit reduction in battery capacity, and improve discharge capacity of batteries, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% with respect to a total weight of the electrolyte.

The lithium secondary battery including the positive electrode according to the present invention as describe above stably exhibits excellent discharging capacity, output properties, and capacity retention, and thus, are useful for portable devices such as a mobile phone, a notebook computer, and a digital camera, and in the field of electric cars such as a hybrid electric vehicle (HEV).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

An outer shape of the lithium secondary battery according to the present invention is not particularly limited, but a cylindrical type using a can, a prismatic type, a pouch type, or a coin type may be used.

The lithium secondary battery according to the present invention may be used in a battery cell which is used as a power source for a small-sized device, and may also be preferably used as a unit cell for a medium- and large-sized battery module including a plurality of battery cells.

Examples of the medium-to-large devices include electric vehicles, hybrid electric vehicles, plug-in hybrid electric vehicles, and energy storage systems (ESS), but are not limited thereto.

## MODE FOR CARRYING OUT THE INVENTION

### Examples

### Preparation Example 1

1 g of polyvinylidene fluoride (Solvay product, weight average molecular weight: 1,000,000 g/mol) was dissolved in 100 mL of dimethylacetamide (Sigma-Aldrich product, N-N dimethyl acetamide), and sodium hydroxide (Sigma-Aldrich product, NaOH $H_2O$) was dissolved in 2-methyl-1-propanol (Sigma-Aldrich product) to synthesize a 0.1 M polymer solution. The NaOH solution and the dissolved polymer solution were placed in a stirrer and subjected to high-speed stirring at 40°C for 4 hours. Then, 10 wt% of initiator (Sigma-Aldrich product, 2,2'-azobis (2-methylpropionitrile) (AIBN), purity: 98%) was added relative to the polymer, 3.5 wt% of benzyl trimethylammonium chloride (Sigma-Aldrich product) was added relative to the polymer, and the mixture was subjected to a reaction at 60°C for 24 hours. Thereafter, deionized water (DI-water) was added to form a precipitate, and the precipitate was washed several times. This precipitate was dried to obtain a cationic polyvinylidene fluoride-based polymer.

### Preparation Example 2

1 g of polyvinylidene fluoride (Solvay product, weight average molecular weight: 1,000,000 g/mol) was dissolved in 100 mL of dimethylacetamide (Sigma-Aldrich product, N-N dimethyl acetamide), and sodium hydroxide (Sigma-Aldrich product, NaOH $H_2O$) was dissolved in 2-methyl-1-propanol (Sigma-Aldrich product) to synthesize a 0.1 M polymer solution. The alkaline (NaOH) solution and the dissolved polymer solution were placed in a stirrer and subjected to high-speed stirring at 40°C for 4 hours. Then, 10 wt% of initiator (Sigma-Aldrich product, 2,2'-azobis (2-methylpropionitrile) (AIBN), purity: 98%) was added relative to the polymer, 8 wt% of benzyl trimethylammonium chloride (Sigma-Aldrich product) was added relative to the polymer, and the mixture was subjected to a reaction at 60°C for 24 hours. Thereafter, deionized water (DI-water) was added to form a precipitate, and the precipitate was washed several times. This precipitate was dried to obtain a cationic polyvinylidene fluoride-based polymer.

### Example 1

A positive electrode active material ($LiNi_{0.84}Co_{0.08}Mn_{0.08}O_2$), a conductive material (carbon black), and the cationic polyvinylidene fluoride-based polymer substituted with an ammonium cation from Preparation Example 1 were mixed in N-methyl-2-pyrrolidone at a weight ratio of 90:5:5, and stirred at 3000 rpm for 90 minutes using a high-speed stirrer (Homodisper) to prepare a positive electrode slurry composition. In this case, the positive electrode slurry composition had a solid content of 70 wt% with respect to a total weight of the positive electrode slurry composition.

The positive electrode slurry composition was applied onto one surface of an aluminum current collector, dried at 110°C for 10 minutes under atmospheric pressure, then dried at 130°C for 10 hours under vacuum, and then rolled to prepare a positive electrode.

In addition, graphite as a negative electrode active material, super C as a conductive material, and a styrene-butadiene rubber (SBR)-carboxymethyl cellulose (CMC) composite as a binder were mixed at a weight ratio of 95.6:1.0:3.4 to prepare a negative electrode slurry, and the electrode slurry was applied onto one surface of a copper current collector, dried at 130°C, and then rolled to prepare a negative electrode.

A separator was interposed between the positive electrode and the negative electrode to manufacture an electrode assembly, and the electrode assembly was placed inside a battery case. Thereafter, an electrolyte was injected into the case to manufacture a lithium secondary battery. The electrolyte was prepared by dissolving $LiPF_6$ at a concentration of 1 M in a mixed organic solvent in which ethylene carbonate, dimethyl carbonate, and diethyl carbonate were mixed in a volume of 1:2:1, and adding vinylene carbonate (VC) in an amount of 2 wt%.

### Example 2

A positive electrode active material ($LiNi_{0.84}Co_{0.08}Mn_{0.08}O_2$), a conductive material (carbon black), and the cationic polyvinylidene fluoride-based polymer substituted with an ammonium cation from Preparation Example 2 were

mixed in N-methyl-2-pyrrolidone at a weight ratio of 90:5:5, and stirred at 3000 rpm for 90 minutes using a high-speed stirrer (Homodisper) to prepare a positive electrode slurry composition. In this case, the positive electrode slurry composition had a solid content of 70 wt% with respect to a total weight of the positive electrode slurry composition.

The positive electrode slurry composition was applied onto one surface of an aluminum current collector, dried at 110°C for 10 minutes under atmospheric pressure, then dried at 130°C for 10 hours under vacuum, and then rolled to prepare a positive electrode.

In addition, graphite as a negative electrode active material, super C as a conductive material, and a styrene-butadiene rubber (SBR)-carboxymethyl cellulose (CMC) composite as a binder were mixed at a weight ratio of 95.6:1.0:3.4 to prepare a negative electrode slurry, and the electrode slurry was applied onto one surface of a copper current collector, dried at 130°C, and then rolled to prepare a negative electrode.

A separator was interposed between the positive electrode and the negative electrode to manufacture an electrode assembly, and the electrode assembly was placed inside a battery case. Thereafter, an electrolyte was injected into the case to manufacture a lithium secondary battery. The electrolyte was prepared by dissolving $LiPF_6$ at a concentration of 1 M in a mixed organic solvent in which ethylene carbonate, dimethyl carbonate, and diethyl carbonate were mixed in a volume of 1:2:1, and adding vinylene carbonate (VC) in an amount of 2 wt%.

**Comparative Example 1**

A positive electrode active material ($LiNi_{0.84}Co_{0.08}Mn_{0.08}O_2$), a conductive material (carbon black), and a binder (polyvinylidene fluoride, PVdF) were mixed in N-methyl-2-pyrrolidone at a weight ratio of 90:5:5, and stirred at 1500 rpm for 2 hours using a high-speed stirrer (Homodisper) to prepare a positive electrode slurry composition. In this case, the positive electrode slurry composition had a solid content of 70 wt% with respect to a total weight of the positive electrode slurry composition.

The positive electrode slurry composition was applied onto one surface of an aluminum current collector, dried at 110°C for 10 minutes under atmospheric pressure, then dried at 130°C for 10 hours under vacuum, and then rolled to prepare a positive electrode.

In addition, graphite as a negative electrode active material, super C as a conductive material, and a styrene-butadiene rubber (SBR)-carboxymethyl cellulose (CMC) composite as a binder were mixed at a weight ratio of 95.6:1.0:3.4 to prepare a negative electrode slurry, and the electrode slurry was applied onto one surface of a copper current collector, dried at 130°C, and then rolled to prepare a negative electrode.

A separator was interposed between the positive electrode and the negative electrode to manufacture an electrode assembly, and the electrode assembly was placed inside a battery case. Thereafter, an electrolyte was injected into the case to manufacture a lithium secondary battery. The electrolyte was prepared by dissolving $LiPF_6$ at a concentration of 1 M in a mixed organic solvent in which ethylene carbonate, dimethyl carbonate, and diethyl carbonate were mixed in a volume of 1:2:1, and adding vinylene carbonate (VC) in an amount of 2 wt%.

**Experimental Example - Evaluation of lifespan at high temperature**

Charging/discharging in which each of the lithium secondary batteries of Examples 1 and 2, and Comparative Example 1 was charged up to 4.2 V, 1/20 C in the condition of CC/CV, 1.0 C at 45°C using an electrochemical charger and discharger and then discharged up to 3.0 V in the condition of CC, 0.5 C was performed as one cycle, and capacity retention was measured. The capacity retention was calculated through the following formula, and the number of cycles at which 80% capacity retention is achieved is shown in Table 1 below.

Capacity retention (%) = {(discharge capacity after N cycles)/(discharge capacity after 1 cycle)} $\times$ 100

(where N is an integer of 1 or greater).

[Table 1]

| | Number of cycles at which 80% capacity retention is achieved |
|---|---|
| Example 1 | 753 |
| Example 2 | 932 |
| Comparative Example 1 | 507 |

As shown in Table 1, the lithium secondary batteries of Examples 1 and 2, which included a cationic polyvinylidene fluoride-based polymer substituted with an ammonium cation as a positive electrode binder, exhibited superior

high-temperature cycle characteristics compared to the lithium secondary battery of Comparative Example 1.

**Claims**

1. A binder for a lithium secondary battery positive electrode, comprising a cationic polyvinylidene fluoride-based polymer substituted with an ammonium cation.

2. The binder for a lithium secondary battery positive electrode of claim 1, wherein the ammonium cation is a quaternary ammonium cation.

3. The binder for a lithium secondary battery positive electrode of claim 1, wherein the cationic polyvinylidene fluoride-based polymer substituted with an ammonium cation comprises a repeating unit of Formula 1 below:

[Formula 1]

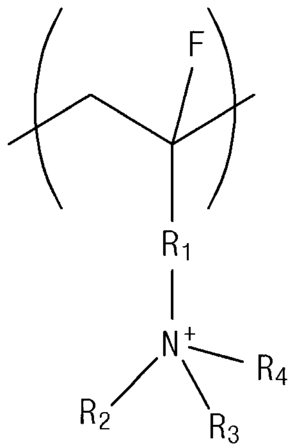

wherein in Formula 1 above, $R_1$ is a divalent organic group, and
$R_2$, $R_3$, and $R_4$ above are each independently any one selected from the group consisting of an alkyl group having 1 to 5 carbon atoms, an alkenyl group having 2 to 5 carbon atoms, an alkynyl group having 2 to 5 carbon atoms, an aryl group having 6 to 8 carbon atoms, and an alkylaryl group having 8 to 10 carbon atoms.

4. The binder for a lithium secondary battery positive electrode of claim 2, wherein $R_1$ above has a structure of Formula 1-1 below:

[Formula 1-1]

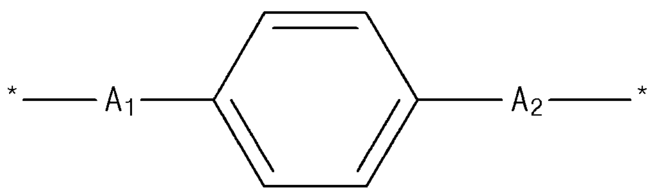

wherein in Formula 1-1 above,
$A_1$ and $A_2$ above are each independently a direct linkage or an alkylene group having 1 to 5 carbon atoms, and
* is a bonding site.

5. The binder for a lithium secondary battery positive electrode of claim 3, wherein the cationic polyvinylidene fluoride-based polymer substituted with an ammonium cation comprises the repeating unit of Formula 1 above in an amount of 0.01 to 20 mol% with respect to a total number of moles of repeating units of the polymer.

**6.** The binder for a lithium secondary battery positive electrode of claim 1, wherein the cationic polyvinylidene fluoride-based polymer substituted with an ammonium cation comprises a repeating unit of Formula 2 below:

[Formula 2]

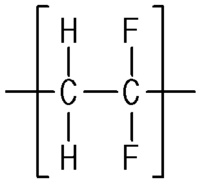

.

**7.** The binder for a lithium secondary battery positive electrode of claim 6, wherein the cationic polyvinylidene fluoride-based polymer substituted with an ammonium cation comprises the repeating unit of Formula 2 above in an amount of 80.00 to 99.99 mol% with respect to a total number of moles of repeating units of the polymer.

**8.** The binder for a lithium secondary battery positive electrode of claim 1, wherein the cationic polyvinylidene fluoride-based polymer has a weight average molecular weight of 300,000 to 1,500,000 g/mol.

**9.** A positive electrode comprising:

a positive electrode current collector; and
a positive electrode active material layer comprising a positive electrode active material, a positive electrode conductive material, and a positive electrode binder,
wherein the positive electrode binder comprises the binder for a lithium secondary battery positive electrode of claim 1.

**10.** The positive electrode of claim 9, wherein the positive electrode binder is provided in an amount of 0.1 to 15 wt% with respect to a total of the positive electrode active material layer.

**11.** A lithium secondary battery comprising:

the positive electrode of claim 9;
a negative electrode; and
a non-aqueous electrolyte.

# INTERNATIONAL SEARCH REPORT

International application No.
**PCT/KR2025/015887**

## A. CLASSIFICATION OF SUBJECT MATTER

**H01M 4/62**(2006.01)i; **H01M 4/13**(2010.01)i; **H01M 10/052**(2010.01)i; **H01M 4/02**(2006.01)i

According to International Patent Classification (IPC) or to both national classification and IPC

## B. FIELDS SEARCHED

Minimum documentation searched (classification system followed by classification symbols)

H01M 4/62(2006.01); H01B 1/06(2006.01); H01M 10/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal), STN (Registry, Caplus), Google & keywords: 리튬이차전지(lithium secondary battery), 양극(cathode), 집전체(current collector), 양극 활물질(cathode active material), 암모늄 양이온(ammonium cation), 폴리비닐리덴플루오라이드(polyvinylidenefluoride, PVDF)

## C. DOCUMENTS CONSIDERED TO BE RELEVANT

| Category* | Citation of document, with indication, where appropriate, of the relevant passages | Relevant to claim No. |
|---|---|---|
| | SHI, Y. et al. Cationic Polymer Binder for Simultaneously Propelling Ion Transfer and Promoting Polysulfide Conversion in Lithium–Sulfur Batteries. ACS Appl. Polym. Mater. 2024 [publication date: 29 June 2024], vol. 6, no. 13, pp. 7430–7440. | |
| X | abstract; pages 7431, 7438; formula 1 | 1,2,6-11 |
| A | | 3-5 |
| | PRAKASH, O. et al. Dehydrohalogenated poly(vinylidene fluoride)-based anion exchange membranes for fuel cell applications. Materials Today Chemistry. 2022, vol. 23, thesis no. 100640, inner pp. 1-8. | |
| A | abstract; formula 1 | 1-11 |
| | WANG, F. et al. Quaternized polymer binder for lithium–sulfur batteries: The effect of cation structure on battery performance. Journal of Energy Chemistry. 2020, vol. 43, pp. 165-172. | |
| A | abstract; formula 1; figure 1 | 1-11 |
| | JP 2024-107590 A (NISSAN MOTOR CO., LTD. et al.) 09 August 2024 (2024-08-09) | |
| A | claims 1-8 | 1-11 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **13 January 2026** | **14 January 2026** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2025/015887**

**C. DOCUMENTS CONSIDERED TO BE RELEVANT**

| Category* | Citation of document, with indication, where appropriate, of the relevant passages | Relevant to claim No. |
|---|---|---|
| A | JP 2008-287932 A (NEC TOKIN CORP.) 27 November 2008 (2008-11-27)<br>claims 1-4 | 1-11 |

Form PCT/ISA/210 (second sheet) (July 2022)

**INTERNATIONAL SEARCH REPORT**
**Information on patent family members**

International application No.
**PCT/KR2025/015887**

| Patent document cited in search report | Publication date (day/month/year) | Patent family member(s) | Publication date (day/month/year) |
|---|---|---|---|
| JP 2024-107590 A | 09 August 2024 | None | |
| JP 2008-287932 A | 27 November 2008 | JP 5187720 B2 | 24 April 2013 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020240138982